# EUROPEAN PATENT SPECIFICATION

(11) **EP 3 577 809 B1**
(45) Date of publication and mention of the grant of the patent: **09.12.2026**
(21) Application number: 18707974.4
(22) Date of filing: 05.02.2018
(51) Int. Cl.: H04L 1/00

(54) **HEADER EXTENSION FORMATS**
KOPFZEILENERWEITERUNGSFORMATE
FORMATS D'EXTENSION D'EN-TÊTE

(30) Priority: 03.02.2017 US 201762454306 P
(43) Date of publication of application: 11.12.2019
(73) Proprietor: Telefonaktiebolaget LM Ericsson (publ), 164 83 Stockholm (SE)
(72) Inventor: FOLKE, Mats, S-162 43 Vällingby (SE); BERGSTRÖM, Mattias, S-192 70 Sollentuna (SE); STATTIN, Magnus, S-194 44 Upplands Väsby (SE)
(74) Representative: Ericsson
(86) International application number: PCT/IB2018/050718
(87) International publication number: WO 2018/142366

(56) References cited:
- WO-A1-2016/010258
- WO-A2-2011/159123
- US-A1- 2009 163 211

## Description

### TECHNICAL FIELD

The present disclosure generally relates to wireless communications and wireless communication networks.

### INTRODUCTION

The Logical Channel Identifier (LCID) field is part of the Medium Access Control (MAC) sub-header in the Long Term Evolution (LTE) MAC protocol. The LCID field in the MAC header is conventionally 5 bits and hence can take 32 values. LCIDs are used to identify which logical channel and MAC control element (CE) are included in the MAC protocol data unit (PDU).

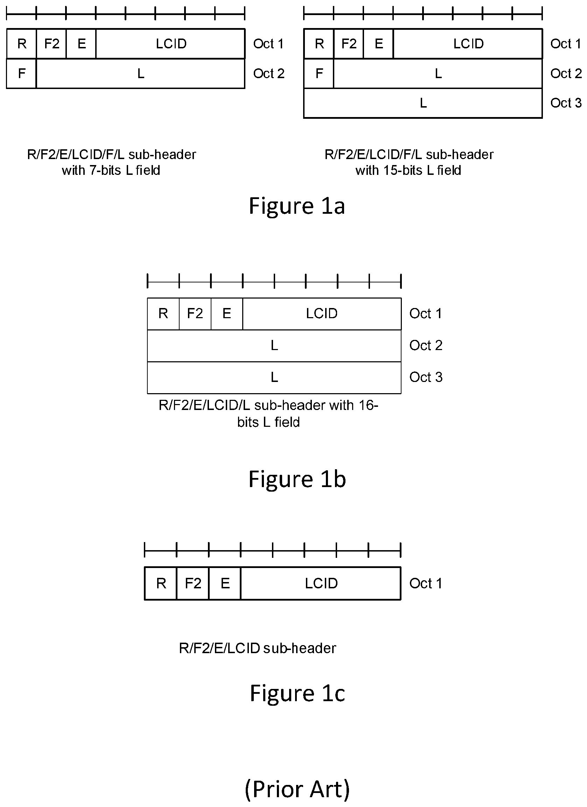

Four different MAC sub-headers have been defined in the 3GPP TS 36.321 v.14.1.0 specification. Figure 1a illustrates the R/F2/E/LCID/F/L MAC sub-header, with a 7 bit L field and a 15 bit L field. Figure 1b illustrates the R/F2/E/LCID/L MAC sub-header, with a 16 bit L field. Figure 1c illustrates the R/F2/E/LCID MAC sub-header.

The fields of these sub-headers are described, in accordance with 3GPP TS 36.321 v.14.1.0, as follows:
R: Reserved bit, set to "0".

F2: The Format2 field indicates the size of the Length field as indicated in table 6.2.1-3 (3GPP TS 36.321 v.14.1.0). There is one F2 field per MAC PDU sub-header. The size of the F2 field is 1 bit. If the size of the MAC SDU or variable-sized MAC control element is larger than 32767 bytes, and if the corresponding sub-header is not the last sub-header, the value of the F2 field is set to 1, otherwise it is set to 0.

E: The Extension field is a flag indicating if more fields are present in the MAC header or not. The E field is set to "1" to indicate another set of at least R/F2/E/LCID fields. The E field is set to "0" to indicate that either a MAC SDU, a MAC control element or padding starts at the next byte.

LCID: The Logical Channel ID field identifies the logical channel instance of the corresponding MAC SDU or the type of the corresponding MAC control element or padding as described in tables 6.2.1-1, 6.2.1-2 and 6.2.1-4 (3GPP TS 36.321 v.14.1.0) for the DL-SCH, UL-SCH and MCH respectively. There is one LCID field for each MAC SDU, MAC control element or padding included in the MAC PDU. In addition to that, one or two additional LCID fields are included in the MAC PDU, when single-byte or two-byte padding is required but cannot be achieved by padding at the end of the MAC PDU. A UE of Category 0 [12] shall indicate CCCH using LCID "01011", otherwise the UE shall indicate CCCH using LCID "00000". The LCID field size is 5 bits.

L: The Length field indicates the length of the corresponding MAC SDU or variable-sized MAC control element in bytes. There is one L field per MAC PDU sub-header except for the last sub-header and sub-headers corresponding to fixed-sized MAC control elements. The size of the L field is indicated by the F field and F2 field.

The LCID is included in both uplink and downlink transmissions and identify logical channels and MAC CEs according to the following tables 6.2.1-1 6.2.1-2 and according to 3GPP TS 36.321 v.14.1.0:

**Table 6.2.1-1 Values of LCID for DL-SCH**

| **Index** | **LCID values** |
|---|---|
| 00000 | CCCH |
| 00001-01010 | Identity of the logical channel |
| 01011-10111 | Reserved |
| 11000 | Activation/Deactivation (4 octets) |
| 11001 | SC-MCCH, SC-MTCH (see note) |
| 11010 | Long DRX Command |
| 11011 | Activation/Deactivation (1 octet) |
| 11100 | UE Contention Resolution Identity |
| 11101 | Timing Advance Command |
| 11110 | DRX Command |
| 11111 | Padding |
| NOTE: Both SC-MCCH and SC-MTCH cannot be multiplexed with other logical channels in the same MAC PDU except for Padding | |

**Table 6.2.1-2 Values of LCID for UL-SCH**

| **Index** | **LCID values** |
|---|---|
| 00000 | CCCH |
| 00001-01010 | Identity of the logical channel |
| 01011 | CCCH |
| 01100-10100 | Reserved |
| 10101 | SPS confirmation |
| 10110 | Truncated Sidelink BSR |
| 10111 | Sidelink BSR |
| 11000 | Dual Connectivity Power Headroom Report |
| 11001 | Extended Power Headroom Report |
| 11010 | Power Headroom Report |
| 11011 | C-RNTI |
| 11100 | Truncated BSR |
| 11101 | Short BSR |
| 11110 | Long BSR |
| 11111 | Padding |

The MAC protocol layer resides in both the wireless devices and network nodes, such as the eNodeB. It is a radio network protocol that is part of the LTE air interface control and user planes. The functions of the MAC sublayer include: mapping between logical channels and transport channels, multiplexing/demultiplexing of MAC service data units (SDUs) belonging to one or different logical channels into/from transport blocks (TB) delivered to/from the physical layer on transport channels, scheduling information reporting, error correction through Hybrid automatic repeat request (HARQ), priority handling between logical channels of one UE, priority handling between UEs by means of dynamic scheduling, transport format selection, and padding.

Document WO 2016/010258 A1 discloses a wireless communication system, that is, a method and a device for handling an unknown MAC PDU. The method comprises: receiving a MAC (Medium Access Control) PDU (Protocol Data Unit) including a LCID (Logical Channel Identifier); discarding a header field containing the LCID and a corresponding MAC SDU (Service Data Unit) indicated by the header field in the received MAC PDU if the LCID is not configured to the UE; and processing remaining parts of the MAC PDU after the header field and the corresponding MAC SDU are discarded from the MAC PDU.

Document WO 2011/159123 A2 discloses an apparatus and a method for transmitting power information by a mobile station in a multiple component carrier system. The method includes: obtaining power headroom that is a difference between maximum transmit power of a mobile station for each component carrier and power estimated for actual uplink transmission; configuring an identification field that identifies a component carrier that the power headroom is for; configuring power headroom fields that indicates a level of power headroom; and generating a medium access control protocol data unit (MAC PDU) including the identification field and the power headroom field and transmitting the generated MAC PDU to a base station.

### SUMMARY

It is an object of the present disclosure to obviate or mitigate at least one disadvantage of the prior art. According to aspects of the present disclosure, methods, transmitting nodes and receiving nodes according to the independent claims are provided. Developments are set forth in the dependent claims.

There are provided exemplary systems and methods for generating and decoding messages including header and/or sub-header extensions.

In a first aspect of the present disclosure, there is provided a method performed by a transmitting node according to appended independent claim 1.

In another aspect of the present disclosure, there is provided a transmitting node according to appended independent claim 3.

In another aspect of the present disclosure, there is provided a method performed by a receiving node according to appended independent claim 5.

In another aspect of the present disclosure, there is provided a receiving node according to appended independent claim 9.

In some embodiments, the indicator indicates that the MAC sub-header includes at least one additional field for signaling the LCID value. The indicator can indicate one of an absence or a presence of an additional octet that includes at least a part of the LCID value. In some embodiments, generating the MAC sub-header can include adding at least one additional LCID field to the MAC sub-header.

In some embodiments, a first portion of the LCID value is signaled in a first LCID field and a second portion of the LCID value is signaled in a second LCID field. In some embodiments, the first LCID field and the second LCID field can be combined to decode the LCID value.

In some embodiments, the indicator can indicate that the LCID value belongs to a first set of LCID values of a plurality of sets of LCID values. In some embodiments, the first set of LCID values can be used to decode the LCID value.

In some embodiments, the indicator can be a first field indicating that the LCID value is provided in a second field in the MAC sub-header.

In some embodiments, the indicator can be appended or prepended to a LCID field to signal and/or to decode the LCID value.

In some embodiments, it can be determined that a header extension is required in accordance with determining that the LCID value cannot be signaled using a first LCID field.

Some embodiments can further include receiving an instruction to use an extended header format.

The various aspects and embodiments described herein can be combined alternatively, optionally and/or in addition to one another.

Other aspects and features of the present disclosure will become apparent to those ordinarily skilled in the art upon review of the following description of specific embodiments in conjunction with the accompanying figures.

### BRIEF DESCRIPTION OF THE DRAWINGS

Embodiments of the present disclosure will now be described, by way of example only, with reference to the attached Figures, wherein:
Figures 1a-c illustrate example MAC sub-header formats;
Figure 2 illustrates an example wireless network;
Figures 3a-c illustrate examples of a flag indicating a sub-header format;
Figures 4a-b illustrate examples of a field value indicating a sub-header format;
Figure 5 illustrates an example of dynamic selection of mapping tables;
Figure 6 illustrates an example of an extension bit prepended to extend an LCID-field;
Figure 7 is a flow chart illustrating a method which can be performed in a transmitting node;
Figure 8 is a flow chart illustrating a method which can be performed in a receiving node;
Figure 9 is a block diagram of an example wireless device;
Figure 10 is a block diagram of an example network node;
Figure 11 is a block diagram of an example transmitting node with modules; and
Figure 12 is a block diagram of an example receiving node with modules.

### DETAILED DESCRIPTION

The embodiments set forth below represent information to enable those skilled in the art to practice the embodiments. Upon reading the following description in light of the accompanying drawing figures, those skilled in the art will understand the concepts of the description and will recognize applications of these concepts not particularly addressed herein. The scope of the invention is therefore defined by the appended claims.

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

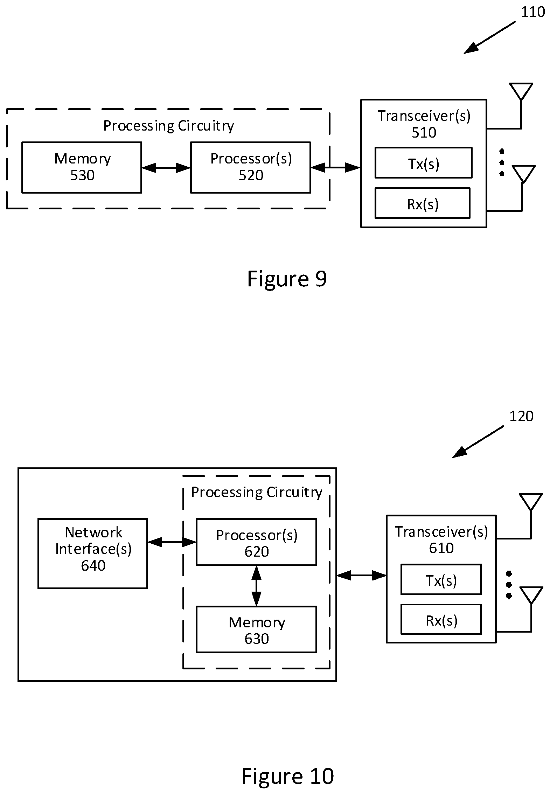

In some embodiments, the non-limiting term "user equipment" (UE) is used and it can refer to any type of wireless device which can communicate with a network node and/or with another UE in a cellular or mobile or wireless communication system. Examples of UE are target device, device to device (D2D) UE, machine type UE or UE capable of machine to machine (M2M) communication, personal digital assistant, tablet, mobile terminal, smart phone, laptop embedded equipped (LEE), laptop mounted equipment (LME), USB dongles, ProSe UE, V2V UE, V2X UE, MTC UE, eMTC UE, FeMTC UE, UE Cat 0, UE Cat M1, narrow band IoT (NB-IoT) UE, UE Cat NB1, etc. Example embodiments of a UE are described in more detail below with respect to Figure 9.

In some embodiments, the non-limiting term "network node" is used and it can correspond to any type of radio access node (or radio network node) or any network node, which can communicate with a UE and/or with another network node in a cellular or mobile or wireless communication system. Examples of network nodes are NodeB, MeNB, SeNB, a network node belonging to MCG or SCG, base station (BS), multi-standard radio (MSR) radio access node such as MSR BS, eNodeB, network controller, radio network controller (RNC), base station controller (BSC), relay, donor node controlling relay, base transceiver station (BTS), access point (AP), transmission points, transmission nodes, RRU, RRH, nodes in distributed antenna system (DAS), core network node (e.g. MSC, MME, etc.), O&M, OSS, Self-organizing Network (SON), positioning node (e.g. E-SMLC), MDT, test equipment, etc. Example embodiments of a network node are described in more detail below with respect to Figure 10.

In some embodiments, the term "radio access technology" (RAT) refers to any RAT e.g. UTRA, E-UTRA, narrow band internet of things (NB-IoT), WiFi, Bluetooth, next generation RAT (NR), 4G, 5G, etc. Any of the first and the second nodes may be capable of supporting a single or multiple RATs.

The terms "radio node", "transmitting node" and "receiving node" used herein can be used to denote a UE or a network node.

The term "signaling" used herein may comprise any of: high-layer signaling (e.g., via RRC or a like), lower-layer signaling (e.g., via a physical control channel or a broadcast channel), or a combination thereof. The signaling may be implicit or explicit. The signaling may further be unicast, multicast or broadcast. The signaling may also be directly to another node or via a third node.

The term "time resource" used herein may correspond to any type of physical resource or radio resource expressed in terms of length of time. Examples of time resources include: symbol, time slot, sub-frame, radio frame, TTI, interleaving time, etc. The term "frequency resource" may refer to sub-band within a channel bandwidth, subcarrier, carrier frequency, frequency band. The term "time and frequency resources" may refer to any combination of time and frequency resources.

Some examples of UE operation include: UE radio measurement (see the term "radio measurement" above), bidirectional measurement with UE transmitting, cell detection or identification, beam detection or identification, system information reading, channel receiving and decoding, any UE operation or activity involving at least receiving of one or more radio signals and/or channels, cell change or (re)selection, beam change or (re)selection, a mobility-related operation, a measurement-related operation, a radio resource management (RRM)-related operation, a positioning procedure, a timing related procedure, a timing adjustment related procedure, UE location tracking procedure, time tracking related procedure, synchronization related procedure, MDT-like procedure, measurement collection related procedure, a CA-related procedure, serving cell activation/deactivation, CC configuration/de-configuration, etc.

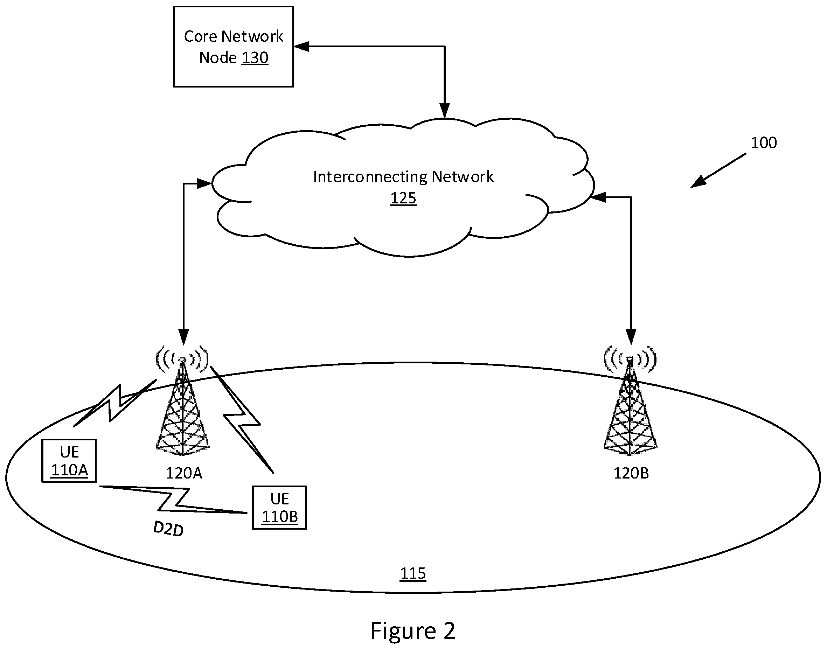

Figure 2 illustrates an example wireless network 100 that can be used for wireless communications. Wireless network 100 includes wireless devices, such as UEs 110A-110B, and a plurality of network nodes, such as radio access nodes 120A-120B (e.g. eNBs, gNBs, etc.) connected to one or more core network nodes 130 via an interconnecting network 125. The network 100 can use any suitable deployment scenarios. UEs 110 within coverage area 115 can each be capable of communicating directly with radio access nodes 120 over a wireless interface. In some embodiments, UEs 110 can also be capable of communicating with each other via D2D communication.

As an example, UE 110A can communicate with radio access node 120A over a wireless interface. That is, UE 110A can transmit wireless signals to and/or receive wireless signals from radio access node 120A. The wireless signals can contain voice traffic, data traffic, control signals, and/or any other suitable information. In some embodiments, an area of wireless signal coverage associated with a radio access node 120 can be referred to as a cell.

The interconnecting network 125 can refer to any interconnecting system capable of transmitting audio, video, signals, data, messages, etc., or any combination of the preceding. The interconnecting network 125 can include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the core network node 130 can manage the establishment of communication sessions and other various other functionalities for UEs 110. Examples of core network node 130 can include mobile switching center (MSC), MME, serving gateway (SGW), packet data network gateway (PGW), operation and maintenance (O&M), operations support system (OSS), SON, positioning node (e.g., Enhanced Serving Mobile Location Center, E-SMLC), MDT node, etc. UEs 110 can exchange certain signals with the core network node using the non-access stratum layer. In non-access stratum signaling, signals between UEs 110 and the core network node 130 can be transparently passed through the radio access network. In some embodiments, radio access nodes 120 can interface with one or more network nodes over an internode interface.

Embodiments of the present disclosure are directed towards transmitting and receiving messages including header extensions. Some embodiments will be described with reference to extending the LCID field through the use of reserved bits in the MAC sub-header. Conventionally, out of the 32 possible LCID values, only 13 LCIDs remain for DL and 9 LCIDs remain for UL (based on MAC protocol version 14.1.0, the values in the tables above listed as "Reserved"). However, these are just preliminary numbers and it is possible that more LCIDs will be used in future releases to add more functionality for MAC.

Those skilled in the art will appreciate that the embodiments described herein could also be applied to other types of fields (e.g. not limited to only LCID-fields) and can also be applied to other types of header(s) and to other protocol(s), for example to RLC headers, PDCP headers, IP-headers, etc.

In one embodiment, an indicator or a flag is provided in a header which indicates the presence/absence of an octet which follows the octet carrying the indication and the octet includes at least a part of an LCID-field. If the indication is set to a first value (e.g. 1 or 0) it indicates that the header is extended by including an octet following the octet with the indication and this octet contains at least a part of an LCID-field.

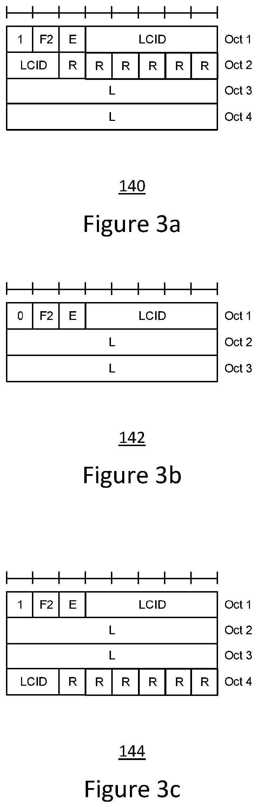

Figures 3a-c illustrate examples of a flag indicating the sub-header format. In the example header 140 of Figure 3a, it is shown that the top-left bit is set to 1 and hence, indicates that an extra octet is following in which an additional LCID-field is present (i.e. Oct 2 in Figure 3a which includes 2 bits for an LCID-field and 6 R-bits). It will be appreciated that instead of R-bits there can be other fields included.

If the indication is set to a second value (e.g. 0 or 1) it indicates that the header is not extended. The example header 142 in Figure 3b illustrates an embodiment of how this can be applied to one of the MAC sub-headers in LTE. The indication is provided in the top left-most bit (e.g. the R bit) which is set to 0 and hence, no extra octet follows.

When an additional octet added, as in the example header 140 of Figure 3a, the additional LCID-field bits are adjacent to the original LCID-field bits. This can simplify the decoding of the LCID-field since the LCID-field is in a contiguous string of bits.

It will be appreciated that the extension can be alternatively added in other places of the header. For example, as shown in the example header 144 of Figure 3c, an additional octet is added at the end (e.g. Oct 4) of the header and this extra octet contains the additional bits for the second LCID-field. Similar to as described above, if the indication (which in this example is placed in the top-left of the figure) is set to a first value it indicates that an extension octet is present, while if it is set to a second value it indicates that the additional octet is not present.

A transmitting node, when determining how to set the fields of the MAC sub-header, can determine the length of the LCID value. If it is determined that the length of the LCID value is five bits, the flag/indicator bit (e.g. the top-left bit) can be set to a first value, no extra octet will be included, and the LCID field will be set equal to the LCID value. If it is determined that the length of the LCID value is greater than five bits, the flag/indicator bit (e.g. the top-left bit) can be set to a second value, and an extra octet will be included. The first part of the LCID field will be set equal to the first part of the LCID value and the second part of the LCID field will be set equal to the second part of the LCID value. It will be appreciated that, alternatively, the first part of the LCID field can be set to the second part of the LCID value and the second part of the LCID field can be set to the first part of the LCID value.

A receiving node, upon reception of a header, can determine whether the flag/indicator (e.g. the top-left bit) is set to a first or second value. If it is determined that the bit is set to a second value, the receiver determines that the LCID value is encoded in the two parts of the LCID field. The receiver can then decode the two parts of the LCID field and combine them to determine the LCID value.

In another embodiment, a specific value of a first field can indicate that, in the header, a second field is present and this second field is used to indicate the actual value for this field-type. The first and/or second fields can be LCID-fields. For example, the LCID-field in a MAC sub-header may be set to a certain value (e.g. 01100) and if the LCID-field is set to this value it means that in the header there is a second LCID-field and this second LCID field is used to indicate the LCID value for this sub-header.

In this scenario, a transmitting node, when determining which LCID is applicable for a sub-header, can determine whether the LCID is of a first set or a second set. The first set of LCIDs contains LCIDs which can be signaled using a first LCID-field, while the second set of LCIDs contains LCIDs which cannot be signaled using the first LCID-field (e.g. due to being of another LCID-value space, being too long, etc.). If it is determined that the LCID is of a first set, the transmitter can indicate the (actual) LCID value in the first LCID-field. If it is determined that the LCID is of a second set (e.g. which cannot be signaled in the first LCID-field), the transmitter can indicate a particular value (e.g. 01100) in the first LCID-field. The transmitter can then further include a second LCID-field, the second LCID-field being set to the value corresponding to the LCID from the second set.

Accordingly, a receiving node, upon reception of a header, can determine whether the LCID-field is set to a particular value (e.g. it is set to 01100) and if this is the case, the receiver identifies that there is a second LCID-field which indicates the actual LCID value for the sub-header. The receiver can then decode that second LCID-field to determine what the LCID value is for the header.

A non-limiting example has been described using a mechanism of setting a first LCID-field to a certain value (that does not correspond to the actual LCID of the sub-header) to indicate that there is a second LCID-field wherein the actual LCID of the sub-header is provided. It will be appreciated that this can be performed in several steps to allow for a further extension of LCIDs. For example, a first LCID-field can be set to a particular value to indicate that there is a second LCID-field, and the second LCID-field can in its turn be set to a particular value to indicate that there is a third LCID-field in the sub-header which indicates the actual LCID. In general, any number of extensions of fields can be indicated in this manner.

It will be appreciated that it can be implicit that a second LCID-field is present in the header if the header is extended. For example, the indication could be interpreted as an indication of the header being extended, and that the header is extended is an indication that a second LCID-field is present.

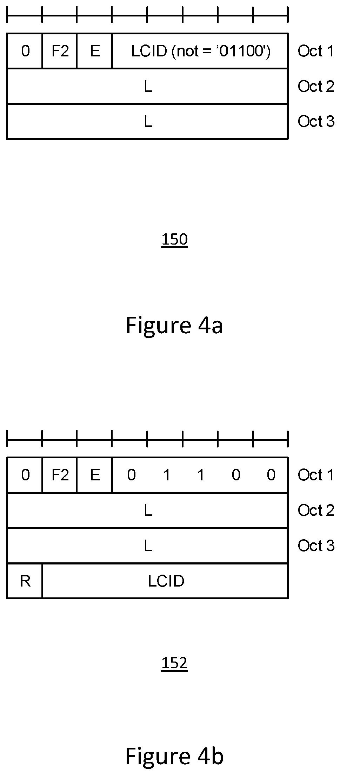

Figures 4a-b illustrate examples of a field value indicating the sub-header format. In the Figure 4a, the LCID-field (the last five bits of the first octet Oct 1) of the header 150 is set to a value other than 01100. This indicates that no additional/extended LCID-field(s) is/are present in the header 150. Instead, the LCID-field carries the value pointing to the LCID applicable for this header.

In Figure 4b, the LCID-field of the header 152 is set to 01100 which (in this example) is used to indicate that the header 152 has an additional/extended LCID-field. In the example header 152 of Figure 4b, the extended LCID-field is placed in the end of the header (Oct 4), but it will be appreciated that it can be placed elsewhere in the header as well.

It will be appreciated that the value "01100" is used for illustrative purposes only. Any appropriate predetermined, specified or configured value can be used to indicate that a header includes at least one additional LCID-field.

In the example of Figures 4a-b, it is noted that the extended LCID-field has 7 bits while the non-extended LCID-field has 5 bits. In one embodiment, the non-extended LCID-field and the extended LCID-field can be associated with different LCID-value spaces such that one particular LCID-value is only present in one of the mapping tables. This is further illustrated below in two example mapping tables where the first mapping table is applicable for the non-extended (5 bit) LCID-field, and the second mapping table is applicable for the extended (7 bit) LCID-field. Since LCID values are only present in one of the table it means that duplicated LCID values can be avoided.

**Table 1: Non-extended LCID mapping table.**

| **Index** | **LCID values** |
|---|---|
| 00000 | CCCH |
| 00001-01010 | Identity of the logical channel |
| 01011 | CCCH |
| 01100 | Indicates presence of extended LCID field |
| 01101-10101 | Reserved |
| 10110 | Truncated Sidelink BSR |
| 10111 | Sidelink BSR |
| 11000 | Dual Connectivity Power Headroom Report |
| 11001 | Extended Power Headroom Report |
| 11010 | Power Headroom Report |
| 11011 | C-RNTI |
| 11100 | Truncated BSR |
| 11101 | Short BSR |
| 11110 | Long BSR |
| 11111 | Padding |

**Table 2: Extended LCID mapping table.**

| **Index** | **LCID values** |
|---|---|
| 0000000 | MAC CE for purpose X |
| 0000001 | MAC CE for purpose Y |
| 0000010 | MAC CE for purpose Z |
| 0000011-1111111 | Reserved |

In another embodiment, a field in the header can indicate how the LCID-field in the header should be interpreted. This can be an indication that the value of the LCID-field is associated with a first mapping table or a second mapping table. Examples of two such mapping tables are provided below. If the field is set to a first value, the first mapping table is applicable. However, if the field is set to a second value, the second mapping table is applicable.

**Table 3: A first Index to LCID value-mapping table**

| **Index** | **LCID values** |
|---|---|
| 00000 | CCCH |
| 00001-01010 | Identity of the logical channel |
| 01011 | CCCH |
| 01100-10101 | Reserved |
| 10110 | Truncated Sidelink BSR |
| 10111 | Sidelink BSR |
| 11000 | Dual Connectivity Power Headroom Report |
| 11001 | Extended Power Headroom Report |
| 11010 | Power Headroom Report |
| 11011 | C-RNTI |
| 11100 | Truncated BSR |
| 11101 | Short BSR |
| 11110 | Long BSR |
| 11111 | Padding |

**Table 4: A second Index to LCID value-mapping table**

| **Index** | **LCID values** |
|---|---|
| 00000 | LCID A |
| 00001-01010 | LCID B |
| 01011 | LCID C |
| 01100-11111 | Reserved |

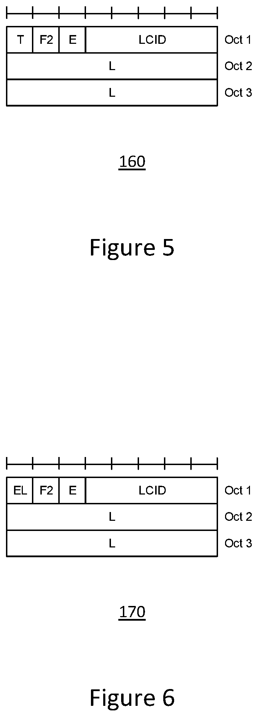

Figure 5 illustrates an example of dynamic selection of mapping table. In the example MAC sub-header 160 of Figure 5, a field "T" is present in the top-left part of the header and if this field is set to a first value (e.g. 0 or 1), the first mapping table is applicable. If the T-field is set to a second value (e.g. 1 or 0), the second mapping table is applicable.

While this example uses a field to select between two mapping tables, this embodiment can be applied to more than two mapping tables, in which case the field that indicates which mapping table is applicable needs to be able to take at least as many values as the number of mapping tables.

In this case, a transmitting node, when determining how to set the T-field, can determine whether the LCID is of a first set or a second set. The first set of LCIDs contains LCIDs corresponding to setting the bit T to a first value, while the second set of LCIDs contains LCIDs corresponding to setting the bit T to a second value. If it is determined that the LCID is of a first set, the transmitter can set the bit T to a first value. If it is determined that the LCID is of a second set, the transmitter can set the bit T to a second value. The LCID field will be set to the LCID.

A receiving node, upon reception of a header, can determine the value of the T-field. If it is determined that the bit T is equal to a first value, the receiver can determine the LCID value using a first set of LCIDs and the LCID field. If it is determined that the bit T is equal to a second value, the receiver can determine the LCID value using a second set of LCIDs and the LCID field. Accordingly, the T-field can be used to select the appropriate set or table of LCIDs.

In another embodiment, a field can be used to extend the LCID-field by being prepended or appended to the LCID-field. Figure 6 illustrates an example implementation of this embodiment, where a field "EL" is present in the top-left of the header 170 which is used to extend the LCID-field. To determine the LCID which is applicable for this sub-header 170, the EL-field can be prepended to the value of the LCID-field. For example, if EL is set to 1 and LCID is set to 10110 the LCID applicable for this sub-header is 110110. In another example, the EL-field can be appended to the LCID field such that if the EL-field is set to 1 and the LCID-field is set to 10110, the LCID applicable to this sub-header is 101101. It may be simpler from a processing point of view to prepend the EL-field in this particular example since to acquire the actual LCID applicable for this sub-header, the decoder of the sub-header can mask out the EL-field and rotate it two steps to the left. The LCID can then be read from the first 6 bits in the first octet.

In some embodiments, the header format which is applicable can be determined based on signaling from the network. This can be signaled using RRC signaling, MAC signaling, etc. If the network determines that an extended header format is needed, for example because the LCID-value range is too small with the non-extended format, the network may configure a UE to apply an extended header format.

In some embodiments, there can be different indications for different links. For example, one indication may be applicable for uplink and another indication may be applicable for downlink and yet another indication for sidelink, etc. This may beneficial for cases where a non-extended format is sufficient for downlink communication while it is necessary to use an extended format in uplink, for example.

In embodiments where RRC signaling, for example, is used, it may not be known exactly when the UE receives and applies the configuration provided in the RRC message. To address this, the network may refrain from scheduling the UE for a certain period of time until the network is certain that the UE has applied the configuration. Another possibility is that the UE applies the previous format (i.e. the format which was applicable prior to the signaling from the network was received) until the UE observes (or receives confirmation) that the network has applied the new format. For example, if at first a non-extended format is applied but the network indicates that an extended format should be applied, the UE would keep on using the non-extended format until the UE observes that the network has sent a message using the new format.

In some embodiments, the network can configure which header format is applicable in communication between the network and the UE. However, this configuration can optionally indicate whether a first set or a second set of MAC header formats is applicable.

Accordingly, several mechanisms can be used to extend a field, such as the LCID-field, in a message, such as the LTE MAC sub-header. A bit-field can indicate the presence of an extension octet wherein at least some bits of the extension octet are used to extended the LCID-field. A field can be used to indicate that an LCID-field is set to a particular value to indicate that the LCID is provided in another field. A field can be used to indicate which mapping table should be applied when determining the applicable LCID. A field can be used to extend the LCID-field by prepending it or appending it to an LCID-field.

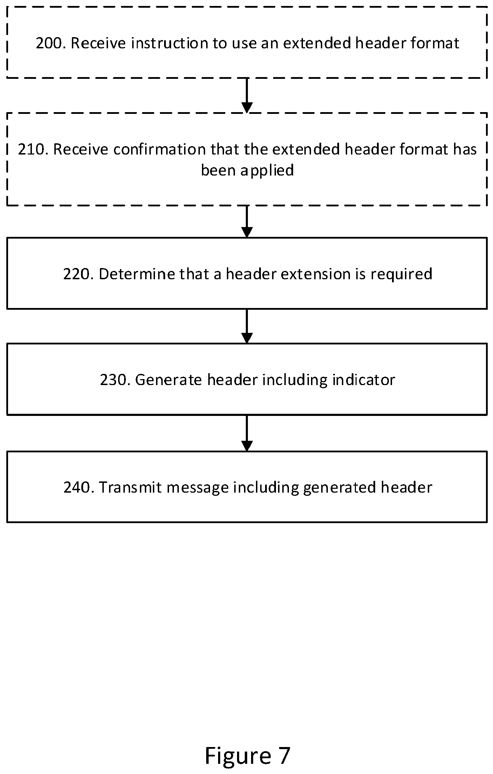

Figure 7 is a flow chart illustrating a method which can be performed in a transmitting node, such as wireless device 110 and/or network node 120. The method can be used to generate a message including a header extension and can include the following steps.

Step 200 (optional): Receiving an instruction to use an extended header format.

Step 210 (optional): Receiving a confirmation that the extended header format has been applied.

Step 220: Determining that a header extension is required.

Step 230: Generating a header extension including an indicator. Generating the header can include setting a header extension indicator, and adding a header extension field and setting the value of that field.

Step 240: Transmitting the message including the generated header.

It will be appreciated that one or more of the above steps can be performed simultaneously and/or in a different order. Also, steps illustrated in dashed lines are optional and can be omitted in some embodiments. The steps will now be described in more detail.

### Step 200

In some embodiments this step is optional for the transmitting node. In step 200, the transmitting node obtains instruction to use an extended header format. In some embodiments, the instruction can be a configuration message indicating a specific type of extended header format to be used by the transmitting node. In some embodiments, a plurality of different header formats can be indicated to the transmitting node for use for different network links.

### Step 210

In some embodiments this step is optional for the transmitting node. In step 210, the transmitting node obtains confirmation that an extended header format has been applied by at least one network node and/or UE. In some embodiments, receipt of the confirmation triggers the transmitting node to start using the extended header format as appropriate. In some embodiments, the transmitting node will continue to use a previously configured header format (e.g. a non-extended header format) until it obtains such confirmation.

### Step 220

In step 220, the transmitting node determines that a header extension is required. Step 220 can occur when the transmitting node is composing/generating a message and determining how to set the header fields. In some embodiments, a header extension can be required for signaling a LCID value.

In some embodiments, it is determined that a header extension is required in accordance with determining that the length of a value exceeding the length of its header field. For example, if the length of a LCID value exceeds 5 bits, an extension may be required for the MAC sub-header.

In some embodiments, it is determined that a header extension is required in accordance with determining that the value cannot be signaled using a first header field (e.g. the value is too long or belongs to another set/space). For example, if a LCID value cannot be signaled using the first LCID field in the MAC sub-header, a header extension may be required.

In some embodiments, it is determined that a header extension is required in accordance with determining that the value belongs to a first set of values out of a plurality of sets of values. For example, if a LCID value is of a first set or of a second set of values, a header extension may be required to indicate which set the LCID value belongs to.

### Step 230

In step 230, the transmitting node generates a header. In some embodiments, the transmitting node can generate a MAC sub-header including an indicator indicating that the LCID value (or field) is extended in this sub-header.

In some embodiments, generating a header includes setting an indicator in the message header that the message includes a header extension. In some embodiments, the message includes a flag or field indicating the presence of a header extension. In some embodiments, the field to be extended can be set to a predetermined value to indicate that the field is extended. In some embodiments, the indicator can indicate which set of values the field belongs to.

In some embodiments, generating a header includes adding the header extension field to the message header and setting the value of the header extension field.

In some embodiments, this can include adding an additional field to the header. For example, an extra octet can be added to the MAC sub-header to include a second LCID field. The LCID value can be placed in the second LCID field. Alternatively, a first portion of the LCID value can be set as the first LCID field and a second portion of the LCID value can be set as the second LCID value.

In some embodiments, the first LCID field can be set a predetermined value (e.g. to indicate the presence of a second LCID field), and the second LCID field can be set to the actual LCID value to be signaled.

In some embodiments, a first portion of the LCID value can be set as prepend or append bit(s) in the header extension indicator field and a second portion of the LCID value can be set in the first LCID field.

### Step 240

In some embodiments this step is optional for the transmitting node. In step 240, the transmitting node transmits the generated message, including the generated MAC sub-header. The message can be transmitted to another wireless device and/or network node.

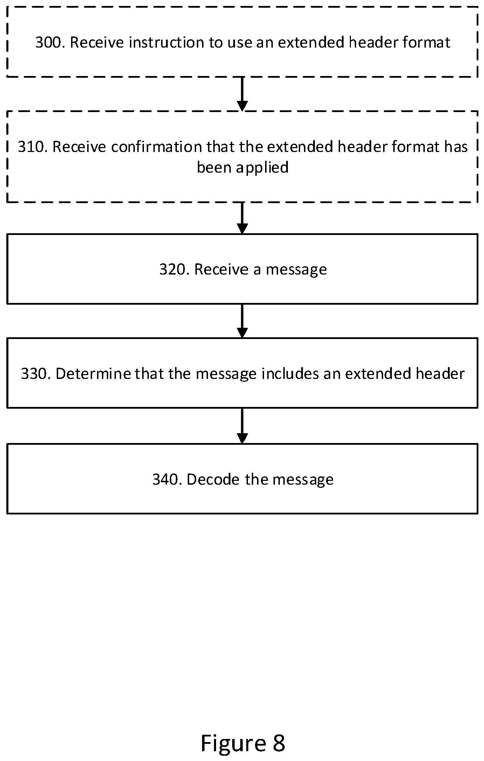

Figure 8 is a flow chart illustrating a method which can be performed in a receiving node, such as wireless device 110 and/or network node 120. The method can be used to decode a message including a header extension and can include the following steps.

Step 300 (optional): Receiving an instruction to use an extended header format.

Step 310 (optional): Receiving a confirmation that the extended header format has been applied.

Step 320: Receiving a message.

Step 330: Determining that the received message includes an extended header.

Step 340: Decoding the message in accordance with the extended header.

It will be appreciated that one or more of the above steps can be performed simultaneously and/or in a different order. Also, steps illustrated in dashed lines are optional and can be omitted in some embodiments. The steps will now be described in more detail.

### Step 300

In some embodiments this step is optional for the receiving node. In step 300, the receiving node obtains instruction to use an extended header format. In some embodiments, the instruction can be a configuration message indicating a specific type of extended header format to be used by the receiving node. In some embodiments, a plurality of different header formats can be indicated to the receiving node for use for different network links.

### Step 310

In some embodiments this step is optional for the receiving node. In step 210, the receiving node obtains confirmation that an extended header format has been applied by at least one network node and/or UE. In some embodiments, receipt of the confirmation triggers the receiving node to start using the extended header format as appropriate. In some embodiments, the receiving node will continue to use a previously configured header format (e.g. a non-extended header format) until it obtains such confirmation.

### Step 320

In step 320, the receiving node receives a message, the message can include a MAC sub-header. The message can be received from another wireless device and/or network node.

### Step 330

In step 330, the receiving node determines that the received message includes an extended header. In some embodiments, the receiving node determines if the received message includes a header extension indicator. In some embodiments, the receiving node determines that the received message includes an extended header for signaling a LCID value in accordance with an indicator included in the MAC sub-header.

In some embodiments, the receiving node determines if the received message includes a particular value in a first field, the particular value indicating that the first field is extended. For example, a predetermined value (e.g. 01100) carried in a first LCID field can indicate to the receiving node that a second LCID field is included in the message header and used to carry the actual LCID value for the header.

In some embodiments, the receiving node determines if the received message includes a particular value in a first field, the particular value indicating which set of values should be used to decoded a second field. For example, the T bit in a MAC sub-header can indicate to the receiving node if the value carried in the LCID field corresponds to a first set of LCID values or a second set of LCID values.

In some embodiments, the receiving node determines if the received message includes a particular value in a first field to be appended or prepended to a value carried in a second field. For example, the EL bit in a MAC sub-header can indicate to the receiving node that this bit (or another bit or field) should be appended/prepended to the value carried in the LCID field.

### Step 340

In step 340, the receiving node decodes the message in accordance with a header extension format. In some embodiments, the particular header extension format can be configured in accordance with steps 300 and/or 310. In some embodiments, the header extension format can be determined in accordance with the received message itself.

In some embodiments, the indicator can indicate an absence/presence of additional LCID information. For example, the indicator can indicate that the MAC sub-header includes at least one additional octet for signaling the LCID value.

In some embodiments, decoding the message can include combining the values from a first field and a second field. For example, the values carried in a first LCID field and a second LCID field can be combined to determine the LCID value for the MAC sub-header.

In some embodiments, the receiving node determines that the received message includes a particular value in a first field, and uses the value in a second field to decode the header. For example, if a predetermined value is included in a first LCID field, the receiving node can use the value of a second LCID field to decode the LCID value for the header.

In some embodiments, the receiving node can select set of values, from a plurality of sets of values, to use to decode a header field. The indicator can indicate that the LCID value belongs to a first set of LCID values of a plurality of sets of LCID values. For example, the receiving node can select a set of LCID values to use for decoding the LCID field in accordance with the T bit of the header. The selected set of values can then be used to decode the LCID value.

In some embodiments, the receiving node can append and/or prepend a first bit/field to a second bit/field to decode the message. For example, the EL field can be appended/prepended to the LCID field to determine the LCID value for a MAC sub-header.

It will be appreciated by those skilled in the art that the format of the LTE MAC header is used for illustrative purposes in the non-limiting examples of Figures 7 and 8. Similar mechanisms can be employed for a variety of header extension and messaging formats and/or protocols.

Figure 9 is a block diagram of an example wireless device, UE 110, in accordance with certain embodiments. UE 110 includes a transceiver 510, processor 520, and memory 530. In some embodiments, the transceiver 510 facilitates transmitting wireless signals to and receiving wireless signals from radio access node 120 (e.g., via transmitter(s) (Tx), receiver(s) (Rx) and antenna(s)). The processor 520 executes instructions to provide some or all of the functionalities described above as being provided by UE, and the memory 530 stores the instructions executed by the processor 520. In some embodiments, the processor 520 and the memory 530 form processing circuitry.

The processor 520 can include any suitable combination of hardware to execute instructions and manipulate data to perform some or all of the described functions of a wireless device, such as the functions of UE 110 described above. In some embodiments, the processor 520 may include, for example, one or more computers, one or more central processing units (CPUs), one or more microprocessors, one or more application specific integrated circuits (ASICs), one or more field programmable gate arrays (FPGAs) and/or other logic.

The memory 530 is generally operable to store instructions, such as a computer program, software, an application including one or more of logic, rules, algorithms, code, tables, etc. and/or other instructions capable of being executed by a processor 520. Examples of memory 530 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information, data, and/or instructions that may be used by the processor 520 of UE 110.

Other embodiments of UE 110 may include additional components beyond those shown in Figure 9 that may be responsible for providing certain aspects of the wireless device's functionalities, including any of the functionalities described above and/or any additional functionalities (including any functionality necessary to support the solution described above). As just one example, UE 110 may include input devices and circuits, output devices, and one or more synchronization units or circuits, which may be part of the processor 520. Input devices include mechanisms for entry of data into UE 110. For example, input devices may include input mechanisms, such as a microphone, input elements, a display, etc. Output devices may include mechanisms for outputting data in audio, video and/or hard copy format. For example, output devices may include a speaker, a display, etc.

Wireless device UE 110 can be operative to perform the various embodiments and aspects described herein with respect to a transmitting node and/or a receiving node.

Figure 10 is a block diagram of an exemplary network node 120, in accordance with certain embodiments. Network node 120 may include one or more of a transceiver 610, processor 620, memory 630, and network interface 640. In some embodiments, the transceiver 610 facilitates transmitting wireless signals to and receiving wireless signals from wireless devices, such as UE 110 (e.g., via transmitter(s) (Tx), receiver(s) (Rx), and antenna(s)). The processor 620 executes instructions to provide some or all of the functionalities described above as being provided by a network node 120, the memory 630 stores the instructions executed by the processor 620. In some embodiments, the processor 620 and the memory 630 form processing circuitry. The network interface 640 can communicate signals to backend network components, such as a gateway, switch, router, Internet, Public Switched Telephone Network (PSTN), core network nodes or radio network controllers, etc.

The processor 620 can include any suitable combination of hardware to execute instructions and manipulate data to perform some or all of the described functions of network node 120, such as those described above. In some embodiments, the processor 620 may include, for example, one or more computers, one or more central processing units (CPUs), one or more microprocessors, one or more application specific integrated circuits (ASICs), one or more field programmable gate arrays (FPGAs) and/or other logic.

The memory 630 is generally operable to store instructions, such as a computer program, software, an application including one or more of logic, rules, algorithms, code, tables, etc. and/or other instructions capable of being executed by a processor 620. Examples of memory 630 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, the network interface 640 is communicatively coupled to the processor 620 and may refer to any suitable device operable to receive input for network node 120, send output from network node 120, perform suitable processing of the input or output or both, communicate to other devices, or any combination of the preceding. The network interface 640 may include appropriate hardware (e.g., port, modem, network interface card, etc.) and software, including protocol conversion and data processing capabilities, to communicate through a network.

Other embodiments of network node 120 can include additional components beyond those shown in Figure 10 that may be responsible for providing certain aspects of the network node's functionalities, including any of the functionalities described above and/or any additional functionalities (including any functionality necessary to support the solutions described above). The various different types of network nodes may include components having the same physical hardware but configured (e.g., via programming) to support different radio access technologies, or may represent partly or entirely different physical components.

Network node 120 can be operative to perform the various embodiments and aspects described herein with respect to a transmitting node and/or a receiving node.

Processors, interfaces, and memory similar to those described with respect to Figures 9 and 10 may be included in other network nodes (such as core network node 130). Other network nodes may optionally include or not include a wireless interface (such as the transceiver described in Figures 9 and 10).

The transmitting node(s) and receiving node(s) described herein can correspond to any of the wireless device(s) 100, network node(s) 120 or other devices described herein.

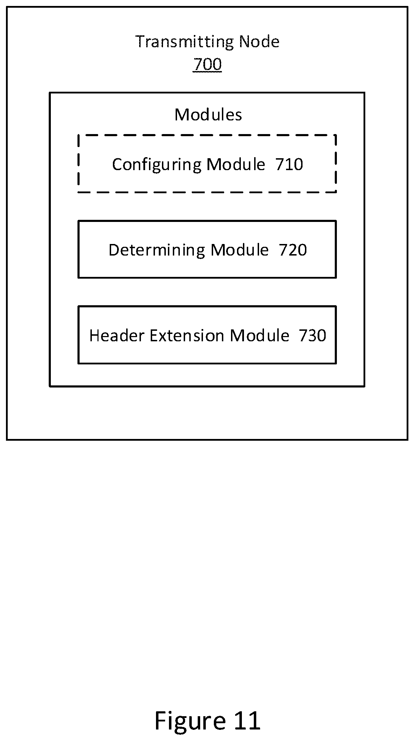

In some embodiments, the wireless device UE 110 and/or network node 120 may comprise a series of modules configured to implement the functionalities of the transmitting node described herein. Referring to Figure 11, in some embodiments, a transmitting node 700 may comprise a configuring module 710 operative to configure the transmitting node with an extended header format, a determining module 720 configured to determine that a header extension is required, and a header extension module 730 configured to generate a message including a header extension.

It will be appreciated that the various modules may be implemented as combination of hardware and software, for instance, the processor, memory and transceiver(s) of UE 110 shown in Figure 9 and/or network node 120 shown in Figure 10. Some embodiments may also include additional modules to support additional and/or optional functionalities.

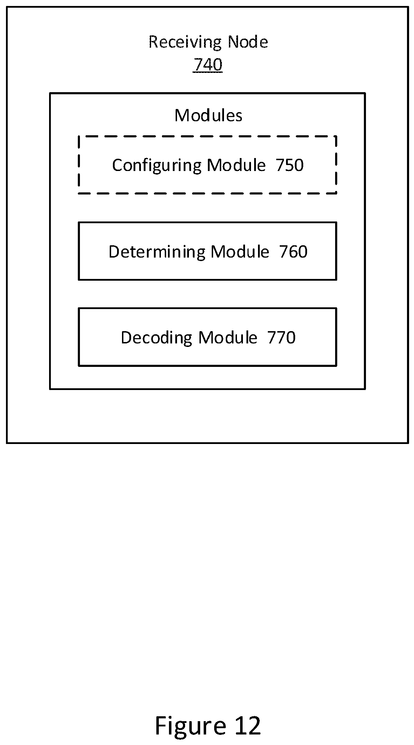

In some embodiments, the UE 110 and/or network node 120 may comprise a series of modules configured to implement the functionalities of the receiving node described herein. Referring to Figure 12, in some embodiments, the receiving node 740 can comprise a configuring module 750 operative to configure the transmitting node with an extended header format, a determining module 760 configured to determine that a received message includes an extended header, and a decoding module 770 configured to decode the received message in accordance with an extended header format.

It will be appreciated that the various modules may be implemented as combination of hardware and software, for instance, the processor, memory and transceiver(s) of UE 110 shown in Figure 9 and/or network node 120 shown in Figure 10. Some embodiments may also include additional modules to support additional and/or optional functionalities.

Those skilled in the art will appreciate that, in some embodiments, a device such as UE 110 and/or network node 120 can include the functionalities of both the transmitting node and receiving node as have been described herein.

### Example of standardization scenarios

### LCID space extension

The number of remaining LCIDs is about to run out and it is proposed to extend the LCID space.

The LCID field in the MAC header is 5 bits and hence can take 32 values. LCIDs are used to identify which logical channel and MAC control element are included in the MAC PDU. Out of the 32 LCID values, it currently only remains 13 LCID for DL and 9 LCIDs left for UL (based on MAC version 14.1.0). However these are just preliminary numbers and it is expected that more LCIDs will be used in Rel-14 (e.g. for VoLTE enhancements, for V2X, NB-IoT, etc.)

The number of LCIDs are limited and will we will run out of them unless an extension is made.

When an extension of the LCID field has been done, RAN2 would have two LCID spaces; one short space (5 bits) and one longer. RAN2 can then decide for each new MAC CE whether to use an LCID of the short or long LCID space. For example, if there is an LCID which is expected to be transmitted in overhead-critical scenarios (e.g. VoLTE, MTC, NB-IoT etc.) it would be better to use a short LCID since fewer bits will be sent over the air. However, for scenarios where overhead is not critical (e.g. CA, DC, etc.) an LCID of the larger space can be used. The short LCIDs would be somewhat more valuable to RAN2 since they are better suited for overhead-critical scenarios. We expect RAN2 to do decide which LCID space to use for a MAC CE on a case-by-case basis.

It may be beneficial to use a short LCID-space in overhead-critical scenarios, while the long LCID-space can be used when overhead is not as critical.

RAN2 may conclude that there are still sufficient number of LCIDs left even by the end of Rel-14. However, based on the observations above, it becomes clear that it is better to do the LCID extension sooner, rather than later. For example, if the LCID extension would have already been done in Rel-13, RAN2 could have used LCIDs of the larger space for the Dual Connectivity Power Headroom Report since this is used in Dual Connectivity scenarios where the overhead is not very critical (compared to e.g. a VoLTE scenario).

It may be beneficial to extend the LCID space sooner rather than later.

Based on the above it is proposed that RAN2 should consider extending the LCID space in Rel-14. This would allow RAN2 to already from Rel-14 select LCIDs for MAC CE based on if the MAC CE is expected to be used in overhead-critical scenarios or not.

RAN2 should aim to extend the LCID space in Rel-14.

To perform an extension of the LCIDs we cannot preclude that RAN2 needs to use a reserved bit in the MAC header. There is now only one reserved bit left in the MAC header though. If this bit were to be used for some other purpose it may become complicated to extend the LCID space, unless new reserved bits were added. We therefore think that, unless RAN2 finds an alternative way to extend the LCID space, the R-bit in the header should not be used for some other purpose.

Until the LCID space has been extended, the last R-bit in the MAC header should not be used for other purposes.

Some embodiments may be represented as a software product stored in a machine-readable medium (also referred to as a computer-readable medium, a processor-readable medium, or a computer usable medium having a computer readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause processing circuitry (e.g. a processor) to perform steps in a method according to one or more embodiments. Those of ordinary skill in the art will appreciate that other instructions and operations necessary to implement the described embodiments may also be stored on the machine-readable medium. Software running from the machine-readable medium may interface with circuitry to perform the described tasks.

The scope of the invention is defined by the appended claims.

### GLOSSARY

The present description may comprise one or more of the following abbreviation:
- 3GPP: Third Generation Partnership Project
- ABS: Almost Blank Subframe
- ACK: Acknowledged
- ADC: Analog-to-digital conversion
- AGC: Automatic gain control
- ANR: Automatic neighbor relations
- AP: Access point
- ARQ: Automatic Repeat Request
- AWGN: Additive White Gaussian Noise band
- BCCH: Broadcast Control Channel
- BCH: Broadcast Channel
- BLER: Block error rate
- BS: Base Station
- BSC: Base station controller
- BTS: Base transceiver station
- CA: Carrier Aggregation
- CC: Component carrier
- CCCH SDU: Common Control Channel SDU
- CDMA: Code Division Multiplexing Access
- CG: Cell group
- CGI: Cell Global Identifier
- CP: Cyclic Prefix
- CPICH Ec/No: CPICH Received energy per chip divided by the power density in the
- CPICH: Common Pilot Channel
- CQI: Channel Quality information
- C-RNTI: Cell RNTI
- CRS: Cell-specific Reference Signal
- CSG: Closed subscriber group
- CSI: Channel State Information
- DAS: Distributed antenna system
- DC: Dual connectivity
- DCCH: Dedicated Control Channel
- DCI: Downlink Control Information
- DFT: Discrete Fourier Transform
- DL: Downlink
- DL-SCH: Downlink shared channel
- DRX: Discontinuous Reception
- DTCH: Dedicated Traffic Channel
- DTX: Discontinuous Transmission
- DUT: Device Under Test
- EARFCN: Evolved absolute radio frequency channel number
- ECCE: Enhanced Control Channel Element
- ECGI: Evolved CGI
- E-CID: Enhanced Cell-ID (positioning method)
- eNB: E-UTRAN NodeB or evolved NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- FDM: Frequency Division Multiplexing
- FFT: Fast Fourier transform
- GERAN: GSM EDGE Radio Access Network
- GSM: Global System for Mobile communication
- HARQ: Hybrid Automatic Repeat Request
- HD-FDD: Half duplex FDD
- HO: Handover
- HRPD: High Rate Packet Data
- HSPA: High Speed Packet Access
- LCMS: Level of Criticality of the Mobility State
- LPP: LTE Positioning Protocol
- LTE: Long-Term Evolution
- M2M: Machine to Machine
- MAC: Medium Access Control
- MBMS: Multimedia Broadcast Multicast Services
- MBSFN ABS: MBSFN Almost Blank Subframe
- MBSFN: Multimedia Broadcast multicast service Single Frequency Network
- MCG: Master cell group
- MDT: Minimization of Drive Tests
- MeNB: Master eNode B
- MIB: Master Information Block
- MME: Mobility Management Entity
- MPDCCH: MTC Physical Downlink Control Channel
- MRTD: Maximum Receive Timing Difference
- MSC: Mobile Switching Center
- MSR: Multi-standard Radio
- MTC: Machine Type Communication
- NACK: Not acknowledged
- NPBCH: Narrowband Physical Broadcast Channel
- NPDCCH: Narrowband Physical Downlink Control Channel
- NR: New Radio
- O&M: Operation and Maintenance
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- PBCH: Physical Broadcast Channel
- PCC: Primary Component Carrier
- P-CCPCH: Primary Common Control Physical Channel
- PCell: Primary Cell
- PCFICH: Physical Control Format Indicator Channel
- PCG: Primary Cell Group
- PCH: Paging Channel
- PCI: Physical Cell Identity
- PDCCH: Physical Downlink Control Channel
- PDSCH: Physical Downlink Shared Channel
- PDU: Protocol Data Unit
- PGW: Packet Gateway
- PHICH: Physical HARQ indication channel
- PLMN: Public Land Mobile Network
- PMI: Precoder Matrix Indicator
- PRACH: Physical Random Access Channel
- ProSe: Proximity Service
- PRS: Positioning Reference Signal
- PSC: Primary serving cell
- PSCell: Primary SCell
- PSS: Primary Synchronization Signal
- PSSS: Primary Sidelink Synchronization Signal
- PUCCH: Physical Uplink Control Channel
- PUSCH: Physical Uplink Shared Channel
- QAM: Quadrature Amplitude Modulation
- RACH: Random Access Channel
- RAT: Radio Access Technology
- RB: Resource Block
- RF: Radio Frequency
- RLM: Radio Link Management
- RNC: Radio Network Controller
- RNTI: Radio Network Temporary Identifier
- RRC: Radio Resource Control
- RRH: Remote Radio Head
- RRM: Radio Resource Management
- RRU: Remote Radio Unit
- RSCP: Received Signal Code Power
- RSRP: Reference Signal Received Power
- RSRQ: Reference Signal Received Quality
- RSSI: Received Signal Strength Indicator
- RSTD: Reference Signal Time Difference
- SCC: Secondary Component Carrier
- SCell: Secondary Cell
- SCG: Secondary Cell Group
- SCH: Synchronization Channel
- SDU: Service Data Unit
- SeNB: Secondary eNodeB
- SFN: System Frame Number
- SGW: Serving Gateway
- SI: System Information
- SIB: System Information Block
- SINR: Signal to Interference and Noise Ratio
- SNR: Signal Noise Ratio
- SON: Self-organizing Network
- SRS: Sounding Reference Signal
- SSC: Secondary Serving Cell
- SSS: Secondary synchronization signal
- SSSS: Secondary Sidelink Synchronization Signal
- TA: Timing Advance
- TDD: Time Division Duplex
- TDM: Time Division Multiplexing
- TTI: Transmission Time Interval
- Tx: Transmitter
- UE: User Equipment
- UL: Uplink
- UL-SCH: Uplink shared channel
- UMTS: Universal Mobile Telecommunication System
- UTRA: Universal Terrestrial Radio Access
- UTRAN: Universal Terrestrial Radio Access Network
- WLAN: Wireless Local Area Network

## Claims

1. A method performed by a transmitting node (110, 110A, 110B, 120, 120A, 120B, 700, 740), the method comprising:
determining (220) that a header extension (152) is required for signaling a Logical Channel Identifier, LCID, value;
generating (230) an extended Medium Access Control, MAC, sub-header including an indicator indicating that the LCID value is extended, wherein the indicator is a first LCID field set to a predetermined value, wherein the predetermined value does not correspond to an actual LCID value of the MAC sub-header, to indicate that the actual LCID value is provided in an additional second LCID field added in the MAC sub-header, wherein the second LCID field is an extended LCID field having 6 or more bits and provides the actual LCID value of the MAC sub-header; and
transmitting (240) a message including the generated MAC sub-header.

2. The method of claim 1, wherein:
- a first portion of the LCID value is signaled in the first LCID field and a second portion of the LCID value is signaled in the second LCID field; and/or
- the method further comprises receiving an instruction to use an extended header format; and/or
- the method further comprises determining that the header extension is required in accordance with determining that the LCID value cannot be signaled using a first LCID field.

3. A transmitting node (110, 110A, 110B, 120, 120A, 120B, 700, 740) comprising circuitry including a processor (520, 620) and a memory (530, 630), the memory containing instructions executable by the processor to cause the transmitting node to:
determine that a header extension (152) is required for signaling a Logical Channel Identifier, LCID, value;
generate an extended Medium Access Control, MAC, sub-header including an indicator indicating that the LCID value is extended, wherein the indicator is a first LCID field set to a predetermined value, wherein the predetermined value does not correspond to an actual LCID value of the MAC sub-header, to indicate that the actual LCID value is provided in an additional second LCID field added in the MAC sub-header, wherein the second LCID field is an extended LCID field having 6 or more bits and provides the actual LCID value of the MAC sub-header; and
transmit a message including the generated MAC sub-header.

4. The transmitting node of claim 3, wherein:
- a first portion of the LCID value is signaled in the first LCID field and a second portion of the LCID value is signaled in the second LCID field; and/or
- the transmitting node is further caused to receive an instruction to use an extended header format.

5. A method performed by a receiving node (110, 110A, 110B, 120, 120A, 120B, 700, 740), the method comprising:
receiving (320) a message including a Medium Access Control, MAC, sub-header for signaling a Logical Channel Identifier, LCID, value; wherein the MAC sub-header includes an indicator indicating that the LCID value is extended, wherein the indicator is a first LCID field set to a predetermined value, wherein the predetermined value does not correspond to an actual LCID value of the MAC sub-header, to indicate that the actual LCID value is provided in an additional second LCID field added in the MAC sub-header, wherein the second LCID field is an extended LCID field having 6 or more bits and provides the actual LCID value of the MAC sub-header; and
decoding (340) the received message in accordance with the extended header.

6. The method of claim 5, wherein:
a first portion of the LCID value is signaled in the first LCID field and a second portion of the LCID value is signaled in the second LCID field.

7. The method of claim 6, further comprising combining the first LCID field and the second LCID field to decode the LCID value.

8. The method of any of claims 5 to 7, further comprising receiving (300) an instruction to use an extended header format.

9. A receiving node (110, 110A, 110B, 120, 120A, 120B, 700, 740) comprising circuitry including a processor (520, 620) and a memory (530, 630), the memory containing instructions executable by the processor to cause the receiving node to:
receive a message including a Medium Access Control, MAC, sub-header for signaling a Logical Channel Identifier, LCID, value; wherein the MAC sub-header includes an indicator indicating that the LCID value is extended, wherein the indicator is a first LCID field set to a predetermined value, wherein the predetermined value does not correspond to an actual LCID value of the MAC sub-header, to indicate that the actual LCID value is provided in an additional second LCID field added in the MAC sub-header, wherein the second LCID field is an extended LCID field having 6 or more bits and provides the actual LCID value of the MAC sub-header; and
decode the received message in accordance with the extended header.

10. The receiving node of claim 9, wherein:
a first portion of the LCID value is signaled in the first LCID field and a second portion of the LCID value is signaled in the second LCID field.

11. The receiving node of claim 10, wherein the receiving node is further caused tiveto combine the first LCID field and the second LCID field to decode the LCID value.

12. The receiving node of any of claims 9 to 11, wherein the receiving node is further caused to receive an instruction to use an extended header format.

## Patentansprüche

1. Verfahren, das von einem sendenden Knoten (110, 110A, 110B, 120, 120A, 120B, 700, 740) durchgeführt wird, wobei das Verfahren Folgendes umfasst:
Bestimmen (220), dass eine Header-Erweiterung (152) zum Signalisieren eines Wertes einer Logikkanalkennung, LCID, erforderlich ist;
Erzeugen (230) eines erweiterten Medium Access Control-Subheaders, MAC-Subheaders, der einen Indikator umfasst, der angibt, dass der LCID-Wert erweitert ist, wobei der Indikator ein erstes LCID-Feld ist, das auf einen vorbestimmten Wert gesetzt ist, wobei der vorbestimmte Wert nicht einem tatsächlichen LCID-Wert des MAC-Subheaders entspricht, um anzugeben, dass der tatsächliche LCID-Wert in einem zusätzlichen, zweiten LCID-Feld bereitgestellt wird, das in dem MAC-Subheader hinzufügt wurde, wobei das zweite LCID-Feld ein erweitertes LCID-Feld mit 6 oder mehr Bits ist und den tatsächlichen LCID-Wert des MAC-Subheaders bereitstellt; und
Senden (240) einer Nachricht, die den erzeugten MAC-Subheader umfasst.

2. Verfahren nach Anspruch 1, wobei:
- ein erster Teil des LCID-Werts in dem ersten LCID-Feld signalisiert wird und ein zweiter Teil des LCID-Werts in dem zweiten LCID-Feld signalisiert wird; und/oder
- das Verfahren ferner Empfangen einer Anweisung zum Verwenden eines erweiterten Header-Formats umfasst; und/oder
- das Verfahren ferner Bestimmen, dass die Header-Erweiterung erforderlich ist, gemäß einem Bestimmen umfasst, dass der LCID-Wert nicht unter Verwendung eines ersten LCID-Felds signalisiert werden kann.

3. Sendender Knoten (110, 110A, 110B, 120, 120A, 120B, 700, 740), umfassend Schaltungsanordnung, die einen Prozessor (520, 620) und einen Speicher (530, 630) umfasst, wobei der Speicher Anweisungen enthält, die vom Prozessor ausgeführt werden können, um den sendenden Knoten zu Folgendem zu veranlassen:
Bestimmen, dass eine Header-Erweiterung (152) zum Signalisieren eines Wertes einer Logikkanalkennung, LCID, erforderlich ist;
Erzeugen eines erweiterten Medium Access Control-Subheaders, MAC-Subheaders, der einen Indikator umfasst, der angibt, dass der LCID-Wert erweitert ist, wobei der Indikator ein erstes LCID-Feld ist, das auf einen vorbestimmten Wert gesetzt ist, wobei der vorbestimmte Wert nicht einem tatsächlichen LCID-Wert des MAC-Subheaders entspricht, um anzugeben, dass der tatsächliche LCID-Wert in einem zusätzlichen, zweiten LCID-Feld bereitgestellt wird, das in dem MAC-Subheader hinzufügt wurde, wobei das zweite LCID-Feld ein erweitertes LCID-Feld mit 6 oder mehr Bits ist und den tatsächlichen LCID-Wert des MAC-Subheaders bereitstellt; und
Senden einer Nachricht, die den erzeugten MAC-Subheader umfasst.

4. Sendender Knoten nach Anspruch 3, wobei:
- ein erster Teil des LCID-Werts in dem ersten LCID-Feld signalisiert wird und ein zweiter Teil des LCID-Werts in dem zweiten LCID-Feld signalisiert wird; und/oder
- der sendende Knoten ferner veranlasst wird, eine Anweisung zum Verwenden eines erweiterten Header-Formats zu empfangen.

5. Verfahren, das von einem empfangenden Knoten (110, 110A, 110B, 120, 120A, 120B, 700, 740) durchgeführt wird, wobei das Verfahren Folgendes umfasst:
Empfangen (320) einer Nachricht, die einen Medium Access Control-Subheader, MAC-Subheader, zum Signalisieren eines Wertes einer Logikkanalkennung, LCID, umfasst;
wobei der MAC-Subheader einen Indikator umfasst, der angibt, dass der LCID-Wert erweitert ist, wobei der Indikator ein erstes LCID-Feld ist, das auf einen vorbestimmten Wert gesetzt ist, wobei der vorbestimmte Wert nicht einem tatsächlichen LCID-Wert des MAC-Subheaders entspricht, um anzugeben, dass der tatsächliche LCID-Wert in einem zusätzlichen, zweiten LCID-Feld bereitgestellt wird, das in dem MAC-Subheader hinzufügt wurde, wobei das zweite LCID-Feld ein erweitertes LCID-Feld mit 6 oder mehr Bits ist und den tatsächlichen LCID-Wert des MAC-Subheaders bereitstellt; und
Decodieren (340) der empfangenen Nachricht gemäß dem erweiterten Header.

6. Verfahren nach Anspruch 5, wobei:
ein erster Teil des LCID-Werts in dem ersten LCID-Feld signalisiert wird und ein zweiter Teil des LCID-Werts in dem zweiten LCID-Feld signalisiert wird.

7. Verfahren nach Anspruch 6, ferner umfassend Kombinieren des ersten LCID-Felds und des zweiten LCID-Felds, um den LCID-Wert zu decodieren.

8. Verfahren nach einem der Ansprüche 5 bis 7, ferner umfassend Empfangen (300) einer Anweisung zum Verwenden eines erweiterten Header-Formats.

9. Empfangender Knoten (110, 110A, 110B, 120, 120A, 120B, 700, 740), umfassend Schaltungsanordnung, die einen Prozessor (520, 620) und einen Speicher (530, 630) umfasst, wobei der Speicher Anweisungen enthält, die vom Prozessor ausgeführt werden können, um den empfangenden Knoten zu Folgendem zu veranlassen:
Empfangen einer Nachricht, die einen Medium Access Control-Subheader, MAC-Subheader, zum Signalisieren eines Wertes eine Logikkanalkennung, LCID, umfasst;
wobei der MAC-Subheader einen Indikator umfasst, der angibt, dass der LCID-Wert erweitert ist, wobei der Indikator ein erstes LCID-Feld ist, das auf einen vorbestimmten Wert gesetzt ist, wobei der vorbestimmte Wert nicht einem tatsächlichen LCID-Wert des MAC-Subheaders entspricht, um anzugeben, dass der tatsächliche LCID-Wert in einem zusätzlichen, zweiten LCID-Feld bereitgestellt wird, das in dem MAC-Subheader hinzufügt wurde, wobei das zweite LCID-Feld ein erweitertes LCID-Feld mit 6 oder mehr Bits ist und den tatsächlichen LCID-Wert des MAC-Subheaders bereitstellt; und
Decodieren der empfangenen Nachricht gemäß dem erweiterten Header.

10. Empfangender Knoten nach Anspruch 9, wobei:
ein erster Teil des LCID-Werts in dem ersten LCID-Feld signalisiert wird und ein zweiter Teil des LCID-Werts in dem zweiten LCID-Feld signalisiert wird.

11. Empfangender Knoten nach Anspruch 10, wobei der empfangende Knoten ferner veranlasst wird, das erste LCID-Feld und das zweite LCID-Feld zu kombinieren, um den LCID-Wert zu decodieren.

12. Empfangender Knoten nach einem der Ansprüche 9 bis 11, wobei der empfangende Knoten ferner veranlasst wird, eine Anweisung zum Verwenden eines erweiterten Header-Formats zu empfangen.

## Revendications

1. Procédé réalisé par un nœud de transmission (110, 110A, 110B, 120, 120A, 120B, 700, 740), le procédé comprenant :
la détermination (220) qu'une extension d'en-tête (152) est nécessaire pour signaler une valeur d'identifiant de canal logique, LCID ;
la génération (230) d'un sous-en-tête de commande d'accès au support, MAC, étendu incluant un indicateur indiquant que la valeur LCID est étendue, dans lequel l'indicateur est un premier champ LCID défini à une valeur prédéterminée, dans lequel la valeur prédéterminée ne correspond pas à une valeur LCID réelle du sous-en-tête MAC, pour indiquer que la valeur LCID réelle est fournie dans un deuxième champ LCID supplémentaire ajouté au sous-en-tête MAC, dans lequel le deuxième champ LCID est un champ LCID étendu présentant 6 bits ou plus et fournit la valeur LCID réelle du sous-en-tête MAC ; et
la transmission (240) d'un message incluant le sous-en-tête MAC généré.

2. Procédé selon la revendication 1, dans lequel :
- une première partie de la valeur LCID est signalée dans le premier champ LCID et une deuxième partie de la valeur LCID est signalée dans le deuxième champ LCID ; et/ou
- le procédé comprend en outre la réception d'une instruction d'utiliser un format d'en-tête étendu ; et/ou
- le procédé comprend en outre la détermination que l'extension d'en-tête est nécessaire en fonction de la détermination que la valeur LCID ne peut pas être signalée en utilisant un premier champ LCID.

3. Nœud de transmission (110, 110A, 110B, 120, 120A, 120B, 700, 740) comprenant une circuiterie incluant un processeur (520, 620) et une mémoire (530, 630), la mémoire contenant des instructions exécutables par le processeur pour amener le nœud de transmission à :
déterminer qu'une extension d'en-tête (152) est nécessaire pour signaler une valeur d'identifiant de canal logique, LCID ;
générer un sous-en-tête de commande d'accès au support, MAC, étendu incluant un indicateur indiquant que la valeur LCID est étendue, dans lequel l'indicateur est un premier champ LCID défini à une valeur prédéterminée, dans lequel la valeur prédéterminée ne correspond pas à une valeur LCID réelle du sous-en-tête MAC, pour indiquer que la valeur LCID réelle est fournie dans un deuxième champ LCID supplémentaire ajouté au sous-en-tête MAC, dans lequel le deuxième champ LCID est un champ LCID étendu présentant 6 bits ou plus et fournit la valeur LCID réelle du sous-en-tête MAC ; et
transmettre un message incluant le sous-en-tête MAC généré.

4. Nœud de transmission selon la revendication 3, dans lequel :
- une première partie de la valeur LCID est signalée dans le premier champ LCID et une deuxième partie de la valeur LCID est signalée dans le deuxième champ LCID ; et/ou
- le nœud de transmission est en outre amené à recevoir une instruction d'utiliser un format d'en-tête étendu.

5. Procédé réalisé par un nœud de réception (110, 110A, 110B, 120, 120A, 120B, 700, 740), le procédé comprenant :
la réception (320) d'un message incluant un sous-en-tête de commande d'accès au support, MAC, pour signaler une valeur d'identifiant de canal logique, LCID ;
dans lequel le sous-en-tête MAC inclut un indicateur indiquant que la valeur LCID est étendue, dans lequel l'indicateur est un premier champ LCID défini à une valeur prédéterminée, dans lequel la valeur prédéterminée ne correspond pas à une valeur LCID réelle du sous-en-tête MAC, pour indiquer que la valeur LCID réelle est fournie dans un deuxième champ LCID supplémentaire ajouté au sous-en-tête MAC, dans lequel le deuxième champ LCID est un champ LCID étendu présentant 6 bits ou plus et fournit la valeur LCID réelle du sous-en-tête MAC ; et
le décodage (340) du message reçu en fonction du sous-en-tête étendu.

6. Procédé selon la revendication 5, dans lequel :
une première partie de la valeur LCID est signalée dans le premier champ LCID et une deuxième partie de la valeur LCID est signalée dans le deuxième champ LCID.

7. Procédé selon la revendication 6, comprenant en outre la combinaison du premier champ LCID et du deuxième champ LCID pour décoder la valeur LCID.

8. Procédé selon l'une quelconque des revendications 5 à 7, comprenant en outre la réception (300) d'une instruction d'utiliser un format d'en-tête étendu.

9. Nœud de réception (110, 110A, 110B, 120, 120A, 120B, 700, 740) comprenant une circuiterie incluant un processeur (520, 620) et une mémoire (530, 630), la mémoire contenant des instructions exécutables par le processeur pour amener le nœud de réception à :
recevoir un message incluant un sous-en-tête de commande d'accès au support, MAC, pour signaler une valeur d'identifiant de canal logique, LCID ;
dans lequel le sous-en-tête MAC inclut un indicateur indiquant que la valeur LCID est étendue, dans lequel l'indicateur est un premier champ LCID défini à une valeur prédéterminée, dans lequel la valeur prédéterminée ne correspond pas à une valeur LCID réelle du sous-en-tête MAC, pour indiquer que la valeur LCID réelle est fournie dans un deuxième champ LCID supplémentaire ajouté au sous-en-tête MAC, dans lequel le deuxième champ LCID est un champ LCID étendu présentant 6 bits ou plus et fournit la valeur LCID réelle du sous-en-tête MAC ; et
décoder le message reçu en fonction du sous-en-tête étendu.

10. Nœud de réception selon la revendication 9, dans lequel :
une première partie de la valeur LCID est signalée dans le premier champ LCID et une deuxième partie de la valeur LCID est signalée dans le deuxième champ LCID.

11. Nœud de réception selon la revendication 10, dans lequel le nœud de réception est en outre amené à combiner le premier champ LCID et le deuxième champ LCID pour décoder la valeur LCID.

12. Nœud de réception selon l'une quelconque des revendications 9 à 11, dans lequel le nœud de réception est en outre amené à recevoir une instruction d'utiliser un format d'en-tête étendu.
